# EUROPÄISCHE PATENTANMELDUNG

(11) **EP 0 802 089 A1**
(43) Veröffentlichungstag der Anmeldung: **22.10.1997**
(21) Anmeldenummer: 97105239.4
(22) Anmeldetag: 27.03.1997
(51) Int. Cl.: B60R 21/20, B62D 1/10

(54) **Baugruppe aus einem Lenkrad, einer Lenkwelle und einem Gassack-Modul**

(30) Priorität: 15.04.1996 DE 29606830 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Degwert, Hartmut, Dipl.-Phys.

(57) **Zusammenfassung**

Die Erfindung betrifft eine Baugruppe aus einem Lenkrad (10), einer mit diesem drehfest verbundenen Lenkwelle (12) und einer in dieser angeordneten Vorrichtung (14) zum Bereitstellen von Druckgas für ein Entfalten eines im Inneren des Lenkrads (10) angeordneten Gassacks (16), dadurch gekennzeichnet, daß im Inneren des Lenkrads (10) eine Halteplatte (30) angeordnet ist, welche die Vorrichtung (14) zum Bereitstellen von Druckgas gegen eine Bewegung in axialer Richtung aus der Lenkwelle (12) heraus fixiert und gleichzeitig den Gassack (16) an der Berandung seiner Einblasöffnung am Lenkrad (10) festlegt.

## Beschreibung

Die Erfindung betrifft eine Baugruppe aus einem Lenkrad, einer mit diesem drehfest verbundenen Lenkwelle und einer in dieser angeordneten Vorrichtung zum Bereitstellen von Druckgas für ein Entfalten eines im Inneren des Lenkrads angeordneten Gassacks, deren Gattung aus dem deutschen Gebrauchsmuster 295 16 621 bekannt ist.

Gemäß der Erfindung ist bei einer solchen Baugruppe vorgesehen, daß im Inneren des Lenkrads eine Halteplatte angeordnet ist, die die Vorrichtung zum Bereitstellen von Druckgas gegen eine Bewegung in axialer Richtung aus der Lenkwelle heraus fixiert und gleichzeitig den Gassack an der Brandung seiner Einblasöffnung am Lenkrad festlegt. Aufgrund dieser Doppelfunktion der Halteplatte ergibt sich ein besonders einfacher Aufbau der erfindungsgemäßen Baugruppe. Weiterhin ergeben sich Vorteile bei der Montage dieser Baugruppe.

Vorteilhafte Ausgestaltungen der Erfindung sind in den Unteransprüchen gegeben.

Die Erfindung wird nachfolgend unter Bezugnahme auf zwei Ausführungsformen beschrieben, die in der beigefügten Zeichnung dargestellt sind. In dieser zeigen:
- Fig. 1 schematisch einen Querschnitt durch eine Baugruppe gemäß einer ersten Ausführungsform der Erfindung;
- Fig. 2 schematisch eine Variante zur Ausführungsform von Fig. 1;
- Fig. 3 schematisch einen Querschnitt durch eine Baugrupppe gemäß einer zweiten Ausführungsform der Erfindung; und
- die Figuren 4a bis 4d schematisch verschiedene Teilansichten von drei Varianten einer Halteplatte für die Baugruppe von Fig. 3.

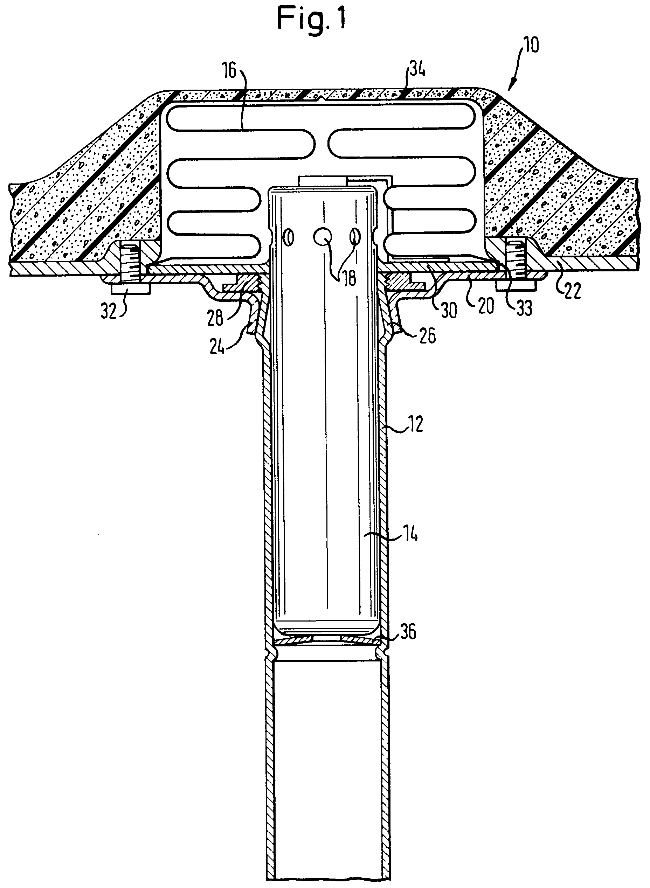

In Fig. 1 ist eine Baugruppe gemäß einer ersten Ausführungsform der Erfindung dargestellt. Die Baugruppe besteht aus einem allgemein mit dem Bezugszeichen 10 versehenen Lenkrad, einer drehfest mit dem Lenkad 10 verbundenen Lenkwelle 12 und einer im Inneren der Lenkwelle 12 angeordneten Vorrichtung 14, die zum Entfalten eines im Inneren des Lenkrads 10 angeordneten Gassacks 16 eine vorbestimmte Menge von Druckgas bereitstellen kann, das aus dem Gasgenerator 14 durch an seinem lenkradseitigen axialen Ende angeordnete Ausströmöffnungen 18 14 ausströmt. Eine solche Vorrichtung kann insbesondere ein Gasgenerator 14 oder ein Druckgasspeicher sein.

Das Lenkrad 10 besteht aus einer Montageplatte 20 und einem umschäumten Lenkradkörper 22. Die Montageplatte 20 ist mit einem Flansch 24 versehen, der auf das komplementär gestaltete Ende 26 der Lenkwelle 12 aufgeschoben ist. Die Befestigung der Montageplatte 20 an der Lenkwelle 12 kann mittels einer Mutter 28 in der Weise geschehen, wie sie im deutschen Gebrauchsmuster 295 16 623 offenbart ist.

Der in die Lenkwelle 12 eingeschobene Gasgenerator 14 ist mit einer Halteplatte 30 versehen, die nach Art eines sich radial erstreckenden Flansches ausgeführt und fest mit dem Gasgenerator 14 verbunden ist. Der Außenumfangsrand der Befestigungsplatte 30 ist zwischen der Montageplatte 20 und dem Lenkradkörper 22 festgespannt, die miteinander durch Schrauben 32 verbunden sind, wobei die Befestigungsplatte 30 im wesentlichen in einer Aufnahmeöffnung 33 des Lenkradkörpers 22 zu liegen kommt. Gleichzeitig ist zwischen dem Außenumfangsrand der Halteplatte 30, der Montageplatte 20 und dem Lenkradkörper 22 der Berandungsabschnitt der Einblasöffnung des Gassacks 16 festgeklemmt.

Durch diese Gestaltung läßt sich eine besonders einfache und rationelle Montage der gesamten Baugruppe erzielen. Beispielsweise wird zuerst die Montageplatte 20 mit der Lenkwelle 12 verschraubt. Falls gewünscht, kann in die Lenkwelle 12 auch eine Federscheibe 36 eingesetzt werden, die neben der Halteplatte 30 zur Fixierung des Gasgenerators 14 beiträgt. Dann kann in die Lenkwelle 12 eine vormontierte Einheit eingesetzt werden, die aus dem Gasgenerator 14, der Halteplatte 30 und dem Gassack 16 besteht, dessen Einblasöffnung über die Halteplatte 30 gestülpt ist. Abschließend wird der Lenkradkörper 22 aufgesetzt, so daß der Gassack 16 im Inneren des Lenkrads hinter einer einstückig am Lenkrad angeschäumten Gassack-Abdeckung 34 zu liegen kommt. Schließlich braucht nur noch der Lenkradkörper 22 mit der Montageplatte 20 verschraubt zu werden.

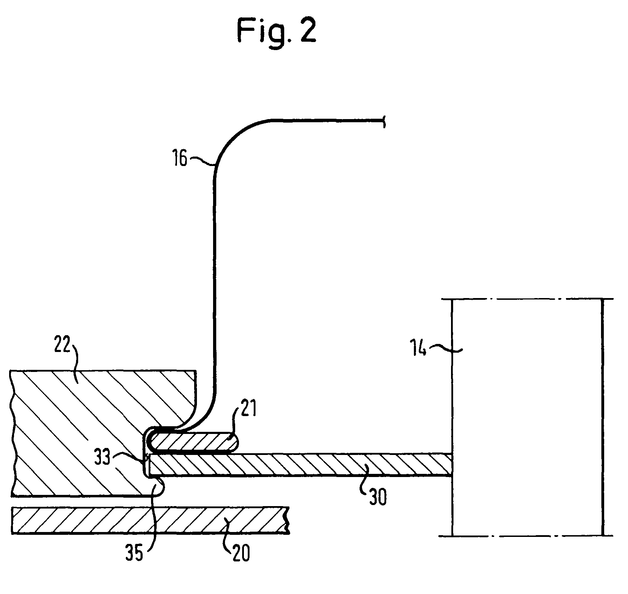

In Fig. 2 ist schematisch eine Variante der ersten Ausführungsform der Erfindung dargestellt. Der Unterschied zur in Fig. 1 dargestellten Ausführungsform besteht darin, daß in den vorgefalteten Gassack 16 ein Ring 21 eingelegt ist. Bei der Montage der Baugruppe wird zuerst der Gassack 16 mit dem Ring 21 in den Lenkradkörper 22 eingesetzt. Dann wird der Gasgenerator 14 mit seiner Halteplatte 30 in die Aufnahmeöffnung 33 des Lenkradkörpers 22 eingesetzt. Anschließend werden durch ein partielles Verformen des Außenumfangsrandes der Aufnahmeöffnung 33 geeignete Preßstellen 35 am Lenkradkörper 22 gebildet, mit denen die Halteplatte 30, der Gasgenerator 14 und der Gassack 16 mit seinem Ring 21 unlösbar mit dem Lenkradkörper 22 verbunden werden, so daß eine vormontierte Einheit gebildet ist. Schließlich wird der Lenkradkörper 22 mit der Montageplatte 20 verschraubt.

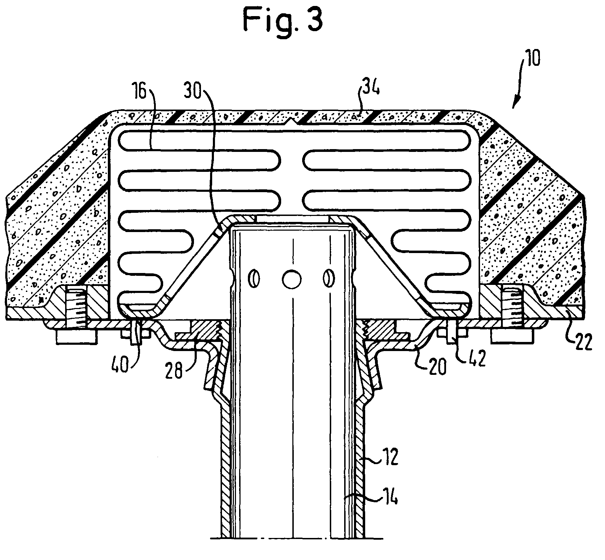

In Fig. 3 ist eine Baugruppe gemäß einer zweiten Ausführungsform der Erfindung gezeigt. Für aus Fig. 1 bekannte Elemente dieser Baugruppe werden dieselben Bezugszeichen verwendet, und es wird auf die entsprechenden Erläuterungen zu Fig. 1 verwiesen.

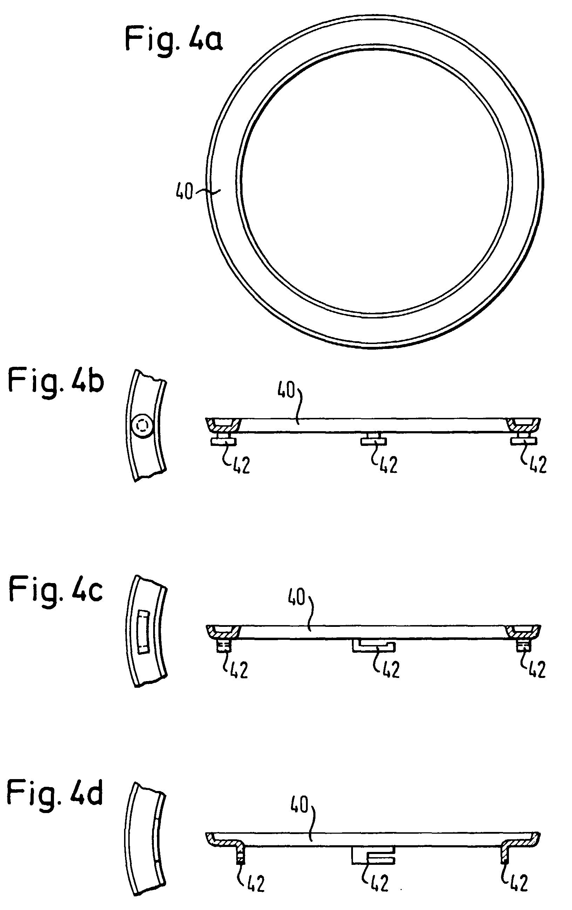

Bei dieser Ausführungsform der Baugruppe ist die Halteplatte 30 napfartig ausgebildet, und die lenkradseitige Stirnfläche des Gasgenerators 14 liegt am Innenboden der napfartigen Halteplatte 30 an. Der Außenumfangsrand 40 der napfartigen Halteplatte 30 ist mit der Montageplatte 20 durch einen Bajonettverschluß verbunden. Mögliche Ausgestaltungen eines solchen Bajonettverschlusses für die Halteplatte 30 sind in den Figuren 4a bis 4d dargestellt. In Fig. 4a ist schematisch der Umfangsrand 40 der Halteplatte 30 dargestellt. Auf der Unterseite (siehe Figuren 4b bis 4d) sind Verriegelungselemente 42 angeordnet. Diese haben bei der in Fig. 4b gezeigten Variante die Form von am Umfangsrand 40 angeordneten Stiften mit einer Stirnplatte, die in komplementäre Öffnungen der Montageplatte 20 eingreifen können. Bei der in Fig. 4c dargestellten Variante bestehen die Verriegelungselemente 42 aus am Umfangsrand 40 angeordneten Haken, und bei der in Fig. 4d dargestellten Variante bestehen die Verriegelungselemente 42 aus am Innenrand des Umfangsrandes 40 ausgebildeten Haken. Auch bei der zweiten Ausführungsform wird die Halteplatte 30 dazu verwendet, sowohl den Gasgenerator 14 als auch den Gassack 16 zu fixieren. Bei dieser Ausführungsform muß die Halteplatte 30 vor dem Aufsetzen des Lenkradkörpers 22 auf die Montageplatte 20 an dieser verriegelt werden.

## Patentansprüche

1. Baugruppe aus einem Lenkrad (10), einer mit diesem drehfest verbundenen Lenkwelle (12) und einer in dieser angeordneten Vorrichtung (14) zum Bereitstellen von Druckgas für ein Entfalten eines im Inneren des Lenkrads (10) angeordneten Gassacks (16), dadurch gekennzeichnet, daß im Inneren des Lenkrads (10) eine Halteplatte (30) angeordnet ist, welche die Vorrichtung (14) zum Bereitstellen von Druckgas gegen eine Bewegung in axialer Richtung aus der Lenkwelle (12) heraus fixiert und gleichzeitig den Gassack (16) an der Berandung seiner Einblasöffnung am Lenkrad (10) festiegt.

2. Baugruppe nach Anspruch 1, dadurch gekennzeichnet, daß das Lenkrad (10) aus einer mit der Lenkwelle (12) verbundenen Montageplatte (20) und einem Lenkradkörper (22) besteht, die fest miteinander verbunden sind.

3. Baugruppe nach Anspruch 2, dadurch gekennzeichnet, daß die Halteplatte (30) zwischen der Montageplatte (20) und dem Lenkradkörper (22) eingespannt ist.

4. Baugruppe nach Anspruch 2, dadurch gekennzeichnet, daß die Halteplatte (30) mit der Montageplatte (20) verschraubt ist.

5. Baugruppe nach Anspruch 2, dadurch gekennzeichnet, daß die Halteplatte (30) mit der Montageplatte (20) durch einen Bajonettverschluß verbunden ist.

6. Baugruppe nach einem der vorhergehenden Ansprüche, dadurch gekennzeichnet, daß die Halteplatte (30) nach Art eines sich in radialer Richtung erstreckenden Flansches ausgeführt und fest mit der Vorrichtung (14) zum Bereitstellen von Druckgas verbunden ist.

7. Baugruppe nach einem der Ansprüche 1 bis 5, dadurch gekennzeichnet, daß die Halteplatte (30) napfartig ausgebildet ist und die lenkradseitige Stirnfläche der Vorrichtung (14) zum Bereitstellen von Druckgas am Innenboden der napfartigen Halteplatte (30) anliegt.

8. Baugruppe nach einem der vorhergehenden Ansprüche, dadurch gekennzeichnet, daß die Vorrichtung (14) zum Bereitstellen von Druckgas elastisch zum Lenkrad (10) hin beaufschlagt ist.

9. Baugruppe nach einem der vorhergehenden Ansprüche, dadurch gekennzeichnet, daß das Lenkrad (10) mit der Lenkwelle (12) durch einen von der Außenseite des Lenkrads (10) betätigbaren Befestigungsmechanismus (28) verbunden ist.

10. Baugruppe nach einem der Ansprüche 2 bis 9, dadurch gekennzeichnet, daß die Berandung des Gassacks (16) zwischen der Halteplatte (30), der Montageplatte (20) und dem Lenkradkörper (22) eingeklemmt ist.

11. Baugruppe nach einem der Ansprüche 2 bis 9, dadurch gekennzeichnet, daß in die Einblasöffnung des Gassacks (16) ein Ring (21) eingesetzt ist und daß die Brandung des Gassacks (16) zwischen dem Ring (21), der Halteplatte (30) und dem Lenkradkörper (22) eingeklemmt ist.

12. Baugruppe nach Anspruch 11, dadurch gekennzeichnet, daß der Ring (21) mit dem Lenkradkörper (22) verpreßt ist.
